# EUROPEAN PATENT APPLICATION

(11) **EP 2 759 327 A1**
(43) Date of publication of application: **30.07.2014**
(21) Application number: 13192900.2
(22) Date of filing: 14.11.2013
(51) Int. Cl.: B01D 19/00

(54) **Deaeration of closed recirculating liquid systems**

(30) Priority: 23.01.2013 DK 201370034
(71) Applicant: BWT HOH A/S, 2670 Greve (DK)
(72) Inventor: LYKKEBO, Leif, DK-2670 Greve (DK)
(74) Representative: Rørdam, Troels Peter

(57) **Abstract**

A closed recirculating liquid system comprising a piping system for carrying a recirculating liquid and a deaeration system, the deaeration system comprising a membrane system with a porous membrane device being substantially permeable to gases and substantially impermeable to liquids, a membrane housing in which the porous membrane device is arranged, and an inlet and an outlet connecting the membrane housing to the piping system in such a way that at least a part of a recirculating liquid may be lead into the membrane housing, along a first side of the porous membrane device and returned to the piping system, and wherein the deaeration system further comprises a vacuum device with an inlet connecting the vacuum device to the membrane housing in such a way that a vacuum may be provided on a second side of the porous membrane device opposite the first side of the porous membrane device such that gas may be removed from the recirculating liquid and an outlet for evacuating the gas removed from the recirculated liquid to the external of the vacuum device.

## Description

The present invention relates to a closed recirculating liquid system comprising a piping system for carrying a recirculating liquid and a deaeration system, the deaeration system comprising a membrane system.

Gases which over time dissolve in the liquid circulating in closed recirculating liquid systems, such as a closed recirculating heating system, e.g. a central heating system or a district heating system, or a closed recirculating cooling system, cause various problems including disruption of the heating or cooling effect of the system and corrosion of the pipe system and other components of the closed recirculating liquid system. Therefore many different ways of deaerating or venting such systems have been developed over time.

DE 102 46 508 B3 describes one attempt at solving the above-mentioned problems by providing a closed recirculating liquid system with a deaeration component comprising a semipermeable membrane made of a polymer, preferably PTFE, with no porosity. The membrane is connected with a porous supporting structure, which does not contribute to the deaeration but merely support the membrane. The deaeration component is forming a part, e.g. a pipe section, of the piping system of a closed recirculating liquid system.

This arrangement has the drawback that sufficient deaeration of especially large capacity closed recirculating liquid systems takes a substantial amount of time.

Another known type of deaeration systems work by leading the liquid to be deaerated into a separate chamber in which it is subjected directly to a vacuum to separate the dissolved gas from the liquid of the closed recirculating liquid system. Once the gas has been separated, the chamber is pressurized and the gas vented to the exterior.

These deaeration systems have the drawback of being very energy consuming and furthermore the pumps used to provide the vacuum are subjected to very high loads, which in turn limits their life time. Thus, these deaeration systems are very expensive to use and maintain.

Therefore, it is the object of the invention to provide a closed recirculating liquid system of the type mentioned in the introduction, with a deaeration system which is energy efficient, which has a large capacity such as to obtain fast deaeration and which is durable and thus inexpensive in use.

According to a first aspect of the invention, this is obtained by a closed recirculating liquid system of the type mentioned in the introduction, wherein the membrane system comprises a porous membrane device being substantially permeable to gases and substantially impermeable to liquids, a membrane housing in which the porous membrane device is arranged, and an inlet and an outlet connecting the membrane housing to the piping system in such a way that at least a part of a recirculating liquid may be lead into the membrane housing, along a first side of the porous membrane device and returned to the piping system, and wherein the deaeration system further comprises a vacuum device with an inlet connecting the vacuum device to the membrane housing in such a way that a vacuum may be provided on a second side of the porous membrane device opposite the first side of the porous membrane device such that gas may be removed from the recirculating liquid and an outlet for evacuating the gas removed from the recirculated liquid to the external of the vacuum device.

By providing the closed recirculating liquid system with a deaeration system comprising a membrane system with a porous membrane device, efficient removal of gases dissolved in the recirculating liquid is obtained by means of a membrane device which is robust and durable.

By providing the membrane system with an inlet and an outlet for connection to the piping system of the closed recirculating liquid system a simple and durable way of connecting the deaeration system both by retrofitting to existing closed recirculating liquid systems and to new closed recirculating liquid systems is obtained.

By providing the closed recirculating liquid system with a deaeration system comprising a vacuum device, the amount of gas removed per time unit is increased which in turn improves the efficiency of the dearation system. Thereby a deaeration system which has a large capacity such as to obtain fast deaeration is obtained, thereby in turn obtaining energy efficiency.

Furthermore, the arrangement of the vacuum device by means of the inlet and the outlet such as to provide vacuum on the second side, also called the gas side, of the porous membrane device opposite the first side, also called the liquid side, of the porous membrane device ensures that the loads to which the vaccum device is subjected are very small, thus providing for an increased life time of the vaccum device, which in turn adds to the durability of the deaeration system.

All of these advantages contribute to the fact that the closed recirculating liquid system with a deaeration system according to the invention is durable and energy efficient and thus very inexpensive in use.

According to a preferred embodiment the porous membrane device comprises at least one membrane element comprising a porous material having micropores being substantially permeable to gas and being substantially impermeable to liquid, the at least one membrane element being arranged such that the first side of the porous membrane device is external to the at least one membrane element and that the second side of the porous membrane device is the micropores of the porous material of the at least one membrane element.

Thereby a membrane system with a particularly simple and robust construction is obtained, not least in relation to the loads inflicted on the mebrane elements by vacuum provided by the vacuum device.

Preferably, the vacuum device of the deaeration system comprises a vacuum pump, preferably being arranged in the outlet of the vacuum device.

According to a preferred embodiment the vacuum device of the deaeration system comprises a vacuum tank arranged between the inlet and the outlet of the vacuum device, the vaccum tank optionally comprising a level indicator.

Thereby an even more robust vaccum system is provided which is subjected to less loads during operation. Furthermore, a smaller amount of liquid - measurements indicate in the order of 0,25 l/week - will in practice always be drawn into the vacuum tank along with the gas irrespective of the type of membrane used. This liquid must be drained from the vacuum tank to eliminate the risk of the liquid entering and destroying the vacuum device. In this connection the provision of a level indicator provides for obtaining a measurement of the liquid or gas level in the vacuum tank indicating when it is time to empty the tank, thus further increasing the efficiency of the deaeration system.

According to a preferred embodiment the inlet of the membrane system comprises any one or more of a valve, a valve actuator, a flow indicator, a pressure switch, a temperature switch, a pump and a saftey valve.

Thereby the flow of liquid through the outlet may be controlled and different parameters thereof may be measured, which in turn provides for possibilities of optimizing the operation of the deaeration system and thus for a more efficient deaeration system.

According to a preferred embodiment the outlet of the membrane system comprises any one or more of at least one valve and a pump.

Thereby the flow of liquid through the outlet may be controlled, which in turn provides for a more efficient deaeration system.

According to a preferred embodiment the porous membrane device is any one of a hollow fiber membrane and a membrane contactor.

Thereby a particularly well functioning and efficient deaeration system is provided.

According to a preferred embodiment the deaeration system further comprises a control system comprising means for measuring the gas content in the recirculating liquid.

Preferably, the control system of the deaeration system further comprises means, such as a vacuum switch or a valve actuator, for automatically activating and deactivating the deaeration system in response to a measurement of the gas content in the recirculating liquid conducted by the means for measuring the gas content in the recirculating liquid.

Thereby the possibility of monitoring, manually or automatically according to the embodiment, the gas content of the recirculating liquid is provided. Thus, the deaeration system, and particularly the vacuum device, may be turned off, manually or automatically according to the embodiment, when the gas content of the recirculating liquid has been brought under a desired or predetermined level. This in turn enables power and thus costs to be saved.

It is noted that tests have shown that with a closed recirculating liquid system according to the invention the power used for deaeration purposes may be reduced by a total of as much as a factor 10 when compared to traditional systems in which the liquid to be deaerated is subjected directly to a vacuum.

The invention will be described in more detail below by means of a non-limiting example of an embodiment and with reference to the schematic drawings, in which
Fig. 1 shows a schematic diagram illustrating a first embodiment of a closed recirculating liquid system according to the invention with a deaeration system,
Fig. 2 shows a schematic diagram illustrating a second embodiment of a closed recirculating liquid system according to the invention with a deaeration system,
Fig. 3 shows a cross sectional view of the porous membrane device of the closed recirculating liquid system according to Fig. 2, the inlets and outlets being omitted for the sake of simplicity, and
Fig. 4 shows a cross sectional view of an alternative embodiment of a porous membrane device according to the invention, the inlets and outlets being omitted for the sake of simplicity.

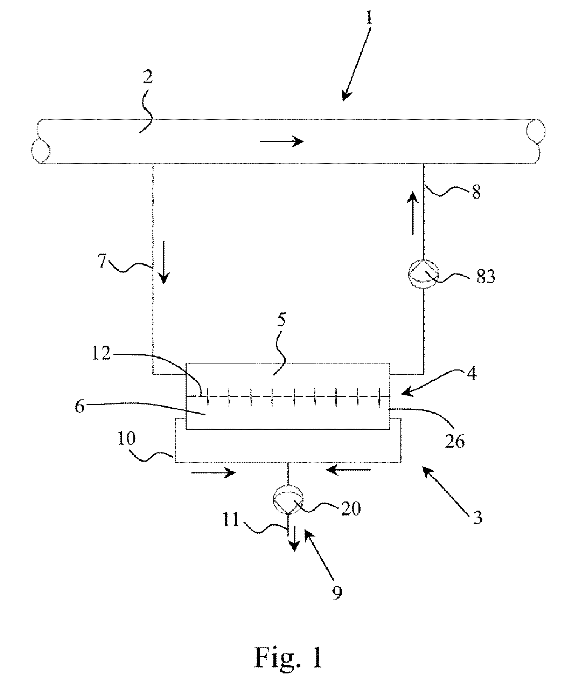

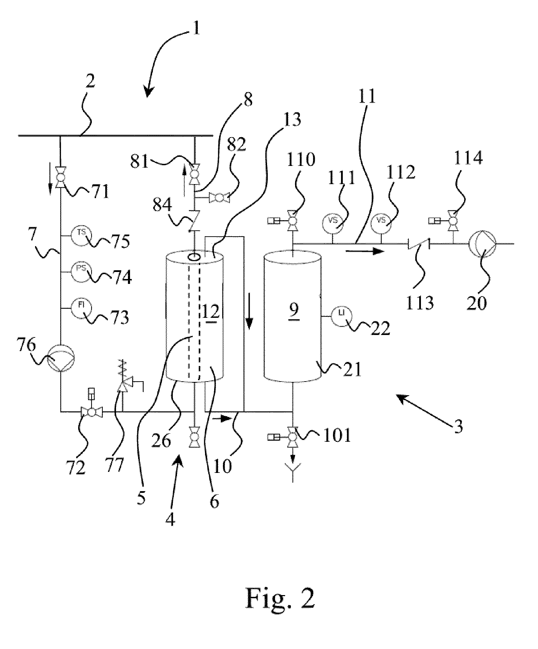

Fig. 1 shows an embodiment of a closed recirculating liquid system generally designated 1. The closed recirculating liquid system 1 comprises a piping system 2 of which only a section is shown on the figures. A recirculating liquid, which is not explicitly shown on the figures, is filled into the closed recirculating liquid system 1 during installation thereof and is thus carried by the piping system 2. The recirculating liquid is circulated through the piping system 2 when the closed recirculating liquid system 1 is in operation. The direction in which the recirculating liquid flows in the piping system 2 of the closed recirculating liquid system 1 and in the membrane system 4 is shown by means of arrows in Fig. 1 and 2.

The closed recirculating liquid system shown in Figs. 1 and 2 is a closed recirculating heating system. Non-limiting examples of such a heating system are central heating systems and district heating systems. Alternatively the closed recirculating liquid system may be a closed recirculating cooling system. Such closed recirculating liquid systems may generally be employed in any kind of building from one-family houses to large multistorey blocks of flats or offices. Furthermore, such a closed recirculating liquid system may cover more than one building.

The recirculating liquid of the closed recirculating liquid system is a suitable heating or cooling medium, preferably and in most cases being water. The recirculating liquid is heated or cooled by means of one or more centrally or locally arranged heating or cooling devices, and it is recirculated in the piping system of the closed recirculating liquid system by means of one or more centrally or locally arranged pumping devices (not shown).

Over time, and particularly in periods in which the closed recirculating liquid system is shut down, such as when a closed recirculating heating system is shut down over the summer, various gases, particularly atmospheric air, dissolve into the recirulating liquid. Also, when a closed recirculating liquid system has been emptied for maintenance purposes air pockets may form when refilling it with liquid. This may lead to corrosion damages to the system as well as to malfunctions, particularly when restarting the closed recirculating liquid system.

Therefore, the closed recirculating liquid system 1 comprises a deaeration system 3. The deaeration system 3 comprises a membrane system 4. The membrane system 4 comprises a porous membrane device 12 being substantially permeable to gases and substantially impermeable to liquids, a membrane housing 26 in which said porous membrane device 12 is arranged, as well as an inlet 7 and an outlet 8. The inlet 7 and the outlet 8 are connected to the membrane housing 26 and thus the porous membrane device 12 and to the piping system 2. At least a part or possibly all of the recirculating liquid comprising dissolved gases is lead through the inlet 7 and along a first side 5, also called liquid side, of the porous membrane device 12 in which the recirculating liquid is deaerated. The deaerated recirculating liquid is then lead through the outlet 8 and returned to the piping system 2 at a point downstream of the inlet 7.

Although it may be less preferred it is in principle possible to reverse the direction of the liquid flow through the membrane system.

The membrane housing 26 may e.g. be a tank, a shell, a casing or the like suitable for withstanding the vacuum applied by a vacuum device 9.

The inlet 7 and the outlet 8 are in the embodiments shown pipe sections, but may alternatively be a connecting piece or simply an opening in the membrane housing 26 connected directly to a corresponding opening in the piping system 2.

As shown on Fig. 1 a pump 83 is provided in the outlet 8 for moving the recirculating liquid thorugh the deaeration system 3. It is noted that the pump may in principle just as well be arranged in the inlet 7, cf. the pump 76 shown in Fig. 2, or that a pump may be arranged in each of the inlet 7 and the outlet 8.

The deaeration system 3 further generally comprises a vacuum device 9 with an inlet 10 and an outlet 11. The inlet 10 connects the vacuum device 9 to the porous membrane device 12, particularly the membrane housing 26, in such a way that a vacuum is provided on a second side 6, also called gas side, of the porous membrane device 12 opposite the first side 5 of the porous membrane device 12. In this way the vacuum provided by the vacuum device 9 draws dissolved gases out of the recirculating liquid thorugh the porous membrane device 12, which simultaneously holds back the liquid. Thereby the gases are separated and removed from the recirculating liquid. The removed gases are then lead through the outlet 11 and are released to the external of the vacuum device 9 and thus the closed recirculating liquid system 1.

Preferably, and as shown on the figures, the vacuum device 9 comprises a vacuum pump 20 for providing the said vacuum. The vacuum device 9 is configured to provide a vacuum on the second side 6 of the porous membrane device 12 being below about 0,15 ATA (atmospheres absolute), preferably below 0,13 ATA and most preferably below 0,1 ATA.

The gases separated from the recirculating liquid flowing along the first side 5 of the porous membrane device 12 thus flows through the pores of the porous membrane device 12 to the second side 6 of the porous membrane device 12 and into the inlet 10 of the vacuum device 9, the separation effect being enhanced by the vacuum provided by the vacuum device 9.

The inlet 10 and the outlet 11 are in the embodiments shown pipe sections, but may alternatively be a connecting piece or simply an opening in the vacuum device 9 (or vaccum tank 21, cf. Fig. 2) connected directly to a corresponding opening in the membrane housing 26.

The direction in which the removed gases flow in the vacuum device 9 of the closed recirculating liquid system 1 is shown by means of arrows on Fig. 1 and 2.

The gases, which dissolve into the recirculating liquid, may in principle be any kind of gases, but are primarily the constituents of atmospheric air. Therefore the deaeration system should first and foremost be able to remove any gas which is present in the atmospheric or ambient air, most preferably CO₂, O₂ and N₂. Preferably, however, the the deaeration system is capable of removing any gas from the liquid.

To this end the porous membrane device 12 comprises one or more membrane elements 13 with pores of a size being sufficiently small to not allow the recirculating liquid, particularly water, to pass through but yet being sufficiently large to allow all gases to pass through. Hence, the one or more membrane elements 13 of the porous membrane device 12 is made of a porous material comprising micropores. Preferred membrane materials are microporous ceramics, microporous polyolefines, microporous polymers or coploymers and microporous hydrophobic materials. The pore size of the one or more membrane elements 13 of the porous membrane device 12 preferably lies between 0,02 µm and 0,04 µm, more preferably between 0,03 µm and 0,04 µm, most preferably around 0,03 µm.

Such materials are generally known, and are e.g. manufactured by Membrana Inc. for use in separation processes carried out in the chemical industry.

The porous membrane device 12 may e.g. be a hollow fiber membrane or a membrane contactor, such as those manufactured by Celgard Inc. under the name Liqui-Cel®.

Preferably the deaeration system 3 is arranged centrally on the piping system 2 of the closed recirculating liquid system in a position near to the pumping device (not shown) circulating the recirculating liquid in the piping system 2. The deaeration system may, however, in principle also be arranged in any other position on the piping system 2.

Also, it is noted that in principle a closed recirculating liquid system according to the invention may comprise more than one deaeration system arranged in different positions on the piping system 2. Also the deaeration system of the closed recirculating liquid system according to the invention may in principle comprise more than one membrane device and/or more than one vacuum device arranged in series or in parallel.

Turning now to Fig. 2 a second embodiment of a closed recirculating liquid system 1 according to the invention with a deaeration system 3 is shown. In the following the closed recirculating liquid system 1 shown in Fig. 2 will be described with regard to the features differing from the first embodiment described above in relation to Fig. 1.

The inlet 7 of the membrane system 4 comprises a valve 71, a valve actuator 72, a flow indicator 73, a pressure switch 74, and a temperature switch 75, a pump 76 and a saftey valve 77.

The valve 71 enables regulating the inflow of recirculating liquid into the membrane system 4. Preferably, the valve 71 is a ball valve.

The valve actuator 72 enables manual or automatic actuation and deactuation of the membrane system 4, possibly in response to measurements obtained by means of one or more of the flow indicator 73, pressure switch 74, and temperature switch 75. Preferably, the valve actuator 72 is a ball valve solenoid actuator.

The flow indicator 73, pressure switch 74, and temperature switch 75 enable measuring the flow, pressure and temperature, respectively, in the inlet 7, and furthermore enable manual or automatic actuation and deactuation of the membrane system 4 and/or the pump 76, e.g. if predetermined threshold values of particularly pressure and temperature are exceeded.

The safety valve 77 enables release of recirculating liquid to the exterior in case of an emergency, e.g. an overpressure in the deaeration system 3.

The outlet 8 of the membrane system 4 comprises two valves 81 and 82 and a check valve 84. These valves enable regulation of the flow of deaerated recirculating liquid through the outlet 8, e.g. such as to hold or withhold the recirculating liquid to be deaerated within the membrane housing 26 for as long as is needed to deaerate the liquid, and furthermore enable regulation of the liquid pressure within the membrane housing 26. Preferably, the valves 81 and 82 are ball valves.

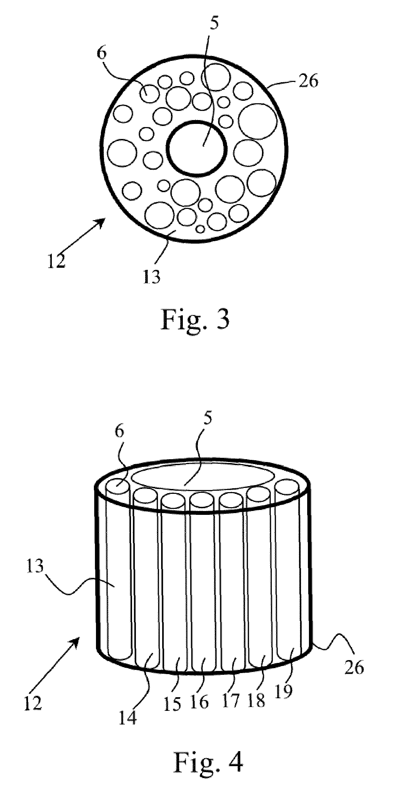

The porous membrane device 12 comprises one membrane element 13 arranged in the membrane housing 26 and shaped in such a way that the first side 5 of the porous membrane device 12, i.e. the side on which the recirculating liquid flows, is provided as a central through cavity in the porous membrane device 12 surrounded by the porous material of the membrane element 13. Put in more general terms, the first side 5 is arranged externally to the membrane element 13. Fig. 3 shows such a porous membrane device 12 in cross section.

The second side 6 of the porous membrane device 12, i.e. the side on which the air or gas removed from the liquid flows and on which vacuum is provided, is provided internally in the membrane element 13 by the pores of the porous material of the membrane element 13, cf. Fig. 3.

The gas seaparated from the recirculating liquid flowing along the first side 5 of the porous membrane device 12 thus flows through the pores of the membrane element 13 to inlet 10 of the vacuum device 9, the separating effect being enhanced by the vacuum provided by the vacuum device 9.

The vacuum device 9 comprises a vacuum tank 21 with an associated level indicator 22 for measuring and indicating the level of gas and/or liquid in the vacuum tank 21. The level indicator may be any suitable type of level indicator such as e.g. a floater.

The inlet 10 of the vacuum device comprises a valve actuator 101 enabling manual or automatic actuation and deactuation of the vacuum device 9, e.g. in response to the measurement of the level indicator 22.

The outlet 11 of the vacuum device comprises valve actuators 110 and 114, vacuum switches 111 and 112 and a check valve 113. Also, a vacuum pump 20 for providing the vacuum provided by the vacuum device 9 is arranged in the outlet 11.

The valve actuators 110 and 114 enable manual or automatic actuation and deactuation of the vacuum device 9 in response to the measurement of the level indicator 22.

Also, a smaller amount of liquid will in practice always be drawn into the vacuum tank along with the gas irrespective of the type of membrane used. Measurements indicate that this amount of liquid may be in the order of 0,25 l/week. This liquid must be drained from the vacuum device 9 or vacuum tank 21 to eliminate the risk of the liquid entering and destroying the vacuum device 9, particularly the vacuum pump 20. To this end the level of the liquid is measured by means of the level indicator 22. When a predetermined threshold of the liquid level is exceeded, the valve actuator 110 is closed, and the liquid may be drained from the vacuum device 9 or vacuum tank 21 via the valve actuator 101.

Preferably, the valve actuators 101, 110 and 114 are ball valve solenoid actuators.

The vacuum pump 20 of the vacuum device 9 may be switched on and off by means of the vacuum switches 111 and 112. In the embodiment shown on Fig. 2, the vacuum switch 111 is for switching on the vacuum pump 20, while the vacuum switch 112 is for switching off the vacuum pump 20. Obviously, the opposite may also be the case or the switching on and off may be integrated in one vacuum switch.

It is noted that the various components such as valves, valve actuators, check valves, switches and indicators arranged in the inlets 7 and 10 as well as the outlets 8 and 11 as described above are all optional, and that any combination of such components as well as additional similar componets may be present according to the needs necessitated by the closed recirculating liquid system.

In a further non-illustrated embodiment, the closed recirculating liquid system 1 may comprise a control system comprising means for measuring the amount of gas dissolved in the recirculating liquid in a manner known per se. The measurement of the amount of gas dissolved in the recirculating liquid may be measured in any suitable way. Preferably, however, the measurement is conducted based on the fact that the flow rate of the liquid in the closed recirculating liquid system 1 and the flow rate of the gas through the vacuum device 9 are directly proportional, which in turn means that the amount of gas dissolved in the recirculating liquid is directly proportional with the pumping speed of the vacuum pump 20. Thus a measurement of the pumping speed of the vacuum pump 20 may be used as an indication of the amount of gas dissolved in the recirculating liquid.

Preferably, the control system is arranged in the inlet 7 of the membrane system 4, in which case the valves 71 and 72 as well as the indicator 73, pressure switch 74, and temperature switch 75 described above may form part of the control system or supply information such as pressure or temperature meaurements thereto. Alternatively, the control system may in principle also be arranged on the piping system 2.

The control system may further comprise means, such as a vacuum switch or a valve actuator (e.g. one or more of those shown on and described in relation to Fig. 2), for automatically activating and deactivating the deaeration system 3 in response to a measurement of the gas content in the recirculating liquid conducted by the means for measuring the gas content in the recirculating liquid.

The control system may be configured to be automatically operated such that the deaeration system 3 is automatically switched to stand-by mode when the gas content of the recirculating liquid falls below a predetermined value. The control system may furthermore be configured to be automatically operated such that when the deaeration system 3 is in stand-by mode it may automatically be switched on with predetermined intervals such as to check if the gas content of the recirculating liquid may have rised above the predetermined value, and if not revert to stand-by mode.

Turning now to Fig. 4, an alternative embodiment of a porous membrane device 12 is shown. In this embodiment the porous membrane device 12 comprises a total of seven membrane elements denoted with reference numerals 13 through 19. The membrane elements 13 to 19 are arranged along an outer periphery of the membrane housing 26, whereby the first side 5 is arranged excentrically in the membrane housing 26.

It is noted that in principle any number of membrane elements may be provided, e.g. fewer or more than the seven shown in Fig. 4.

Also, the membrane elements may have any cross sectional shape including irregular and any distribution within the membrane device including distributions following a pattern, e.g. a geometrical pattern, and distributions being chaotic, random or otherwise not following a pattern.

Furthermore, the first side 5 through which the recirculating liquid flows may have any cross sectional shape including irregular. For example it would be feasible to provide the first side 5 as an interspace between a plurality of membrane elements.

Also, the membrane housing 26, although shown as cylindrical on the figures, may in principle have any suitable shape.

The invention should not be regarded as being limited to the described embodiments. Several modifications and combinations of the different embodiments will be apparent to the person skilled in the art.

## Claims

1. A closed recirculating liquid system (1) comprising a piping system (2) for carrying a recirculating liquid and a deaeration system (3), the deaeration system comprising a membrane system (4) with:
a porous membrane device (12) being substantially permeable to gases and substantially impermeable to liquids,
a membrane housing (26) in which said porous membrane device (12) is arranged, and
an inlet (7) and an outlet (8) connecting said membrane housing (26) to said piping system (2) in such a way that at least a part of a recirculating liquid may be lead into the membrane housing (26), along a first side (5) of said porous membrane device (12) and returned to said piping system (2), wherein
said deaeration system (3) further comprises a vacuum device (9) with an inlet (10) connecting said vacuum device (9) to said membrane housing (26) in such a way that a vacuum may be provided on a second side (6) of said porous membrane device (12) opposite said first side (5) of said porous membrane device (12) such that gas may be removed from said recirculating liquid and an outlet (11) for evacuating the gas removed from said recirculated liquid to the external of said vacuum device (9), wherein
said porous membrane device (12) comprises at least one membrane element (13) comprising a porous material having micropores being substantially permeable to gas and being substantially impermeable to liquid, the at least one membrane element (13) being arranged such that said first side (5) of said porous membrane device (12) is external to said at least one membrane element (13) and that said second side (6) of said porous membrane device (12) is said micropores of said porous material of said at least one membrane element (13), and wherein
said vacuum device (9) of said deaeration system (3) comprises a vacuum tank (21) arranged between said inlet (10) and said outlet (11) of said vacuum device (9).

2. A closed recirculating liquid system according to claim 1, wherein said vacuum device (9) of said deaeration system (3) comprises a vacuum pump (20), preferably being arranged in said outlet (11) of said vacuum device (9).

3. A closed recirculating liquid system according to any one of the above claims, wherein said vaccum tank (21) comprises a level indicator (22).

4. A closed recirculating liquid system according to any one of the above claims, wherein said inlet (7) of said membrane system (4) comprises any one or more of a valve (71), a valve actuator (72), a flow indicator (73), a pressure switch (74), a temperature switch (75), a pump (76) and a safety valve (77).

5. A closed recirculating liquid system according to any one of the above claims, wherein said outlet (8) of said membrane system (4) comprises any one or more of at least one valve (81, 82, 84) and a pump (83).

6. A closed recirculating liquid system according to any one of the above claims, wherein said porous membrane device (12) is any one of a hollow fiber membrane and a membrane contactor.

7. A closed recirculating liquid system according to any one of the above claims, wherein said deaeration system (3) further comprises a control system comprising means for measuring the gas content in the recirculating liquid.

8. A closed recirculating liquid system according to claim 7, wherein said control system of said deaeration system (3) further comprises means, such as a vacuum switch or a valve actuator, for automatically activating and deactivating said deaeration system (3) in response to a measurement of the gas content in the recirculating liquid conducted by said means for measuring the gas content in the recirculating liquid.

9. A closed recirculating liquid system according to any one of the above claims, wherein said closed recirculating liquid system (1) is a closed recirculating heating system, such as a central heating system or a district heating system, or a closed recirculating cooling system.
